# NEUE EUROPÄISCHE PATENTSCHRIFT

(11) **EP 0 626 322 B2**
(45) Veröffentlichungstag und Bekanntmachung des Hinweises auf die Entscheidung über den Einspruch: **22.12.1999**
(45) Hinweis auf die Patenterteilung: 05.03.1997
(21) Anmeldenummer: 94106199.6
(22) Anmeldetag: 21.04.1994
(51) Int. Cl.: B65D 75/36, B65D 75/34

(54) **Durchdrückfolie für Durchdrückverpackung**
Foil sheet for blister packs
Feuille pour emballage du type blister

(30) Priorität: 25.05.1993 DE 4317326
(43) Veröffentlichungstag der Anmeldung: 30.11.1994
(73) Patentinhaber: EVC Rigid Film GmbH, 79219 Staufen (DE)
(72) Erfinder: Hoh, Manfred, D-79 276 Reute (DE)
(74) Vertreter: Schmitt, Hans, Dipl.-Ing.

(56) Entgegenhaltungen:
- EP-A- 0 090 554
- EP-A- 0 286 407
- DE-A- 2 335 123
- DE-A- 3 710 670
- DE-A- 4 236 450
- DE-U- 8 710 132
- DE-U- 9 103 973
- Physikalische Chemie, VCH-Verlagsgesellschaft, S. 201-202, 208-209;
- Ullmanns Encyklopädie der technischen Chemie, 4. neubearbeitete und erweiterte Auflage, Band 15, Verlag Chemie, S. 216;
- Römpp Chemie Lexikon, 9. erweiterte und neubearbeitete Auflage, Georg Thieme Verlag Stuttgart, S. 3507-3508;
- Ullmanns Encyklopädie der technischen Chemie, 4. neubearbeitete und erweiterte Auflage, Band 15, Verlag Chemie, S. 340-341.
- Ullmanns Encyklopädie der technischen Chemie, 4. neubearbeitete und erweiterte Auflage, Band 6, Verlag Chemie, S. 549-550.

## Beschreibung

Die Erfindung betrifft eine Durchdrückfolie für eine Durchdrückverpackung gemäß dem Oberbegriff des Anspruchs 1, bei der die Durchdrückfolie das Verpackungsgut abschließt, aber durch das Durchdrücken des Verpackungsgutes aufreißbar oder aufbrechbar ist.

Solche Durchdrückfolien bestehen in der Regel aus Metall und sind mit einer aus Kunststoff bestehenden Tiefziehfolie verbunden, um beispielsweise Medikamente in Tablettenform einzeln entnehmen zu können, ohne daß andere Tabletten der Atmosphäre ausgesetzt werden. Auch Kleinteile werden in derartigen Verpackungen oder in Blisterverpackungen angeboten. Soll eine solche aus unterschiedlichen Werkstoffen bestehende Verpackung wieder aufgearbeitet werden, ergeben sich erhebliche Schwierigkeiten.

Zwar wurde schon gelegentlich vorgeschlagen, eine Durchdrückpackung mit einer Abdeckfolie aus Papier zu versehen, jedoch reicht dann häufig der Schutz für das verpackte Medikament nicht aus und darüber hinaus ergeben sich ebenfalls Probleme beim Recycling, zumal Papier dann oft beschichtet sein muß und Klebstoff zur Verbindung mit der Tiefziehpackung erforderlich sein kann.

Aus DE-GM 91 03 973 ist eine Durchdrückfolie für eine Durchdrückverpackung der eingangs erwähnten Art bekannt, bei welcher Vorder- und Rückteil aus dem gleichen Kunststoff bestehen. Damit diese Verpackung geöffnet werden kann, ist die Durchdrückfolie mit einer aufbrechbaren Perforation versehen, d.h. das Innere dieser Verpackung ist nicht dicht abgeschlossen.

Zwar wurden auch schon aus Kunststoff bestehende Abdeckfolien beispielsweise für Verpackungen von Medikamenten erwähnt, jedoch ist dabei ein Durchdrücken vor allem empfindlicherer Medikamente in der Regel nicht oder nicht ohne Beschädigung der manchmal in Kapselform zur Verfügung gestellten Tabletten möglich. Kunstsoffolien als Abdeckfolien für dichte Verpackungen haben sich deshalb in der Praxis nicht durchgesetzt.

Der Erfindung liegt die Aufgabe zugrunde, eine Durchdrückfolie der eingangs erwähnten Art für Durchdrückverpackungen zu schaffen, die trotz ihrer Abreiß- oder Aufreißbarkeit ihren Inhalt dicht abgeschlossen und durch ihre Sperreigenschaften vor Verderb schützend umgibt.

Diese Aufgabe wird bei einer gattungs-gemäßen Durchdrückfolie mit den Mitteln und Merkmalen des kennzeichnenden Teiles des Patentanspruches 1 gelöst.

Es werden also miteinander an sich unverträgliche Kunststoffe vermischt und zu der Durchdrückfolie verarbeitet, so daß sich daraus zwar eine geschlossene und somit zum Abschluß geeignete Folie ergibt, die jedoch nur eine niedrige Reiß- oder Schlagzugfestigkeit hat. Somit ergibt sich trotz der Verwendung einer Kunststofffolie, die zusammen mit der übrigen Kunststoffverpackung gut recyclingfähig ist, die Möglichkeit, das verpackte Teil einfach und ohne Beschädigungsgefahr sowie ohne unnötigen Kraftaufwand und ohne Verwendung von Werkzeugen durch diese Durchdrückfolie hindurchdrücken zu können. Dies wird dadurch erreicht, daß hier an sich unverträgliche Kunststoffe gemischt werden.

Zwar ist aus DE 37 10 670 A1 schon ein Klebeband mit einer Trägerfolie aus Kunststoff bekannt, das leicht mit den Fingern ein oder abgerissen werden kann. Dies beruht jedoch auf einer Körnigkeit von teilchenförmigen Zuschlagstoffen.

Aus DE 28 46 002 A1 ist ein Verfahren bekannt, um Polyolefinfilme mit Hilfe von Überzugsmitteln besser wärmeschweißbar zu machen, wobei das Überzugsmittel PMMA enthalten kann. Eine Durchdrückfolie der gattungsgemäßen Art mit den Mitteln zur Lösung der vorstehend genannten Aufgabe wird dadurch nicht nahegelegt.

Die Durchdrückfolie kann aus einer Mischung von Polyolefinen und anderen Polymeren bestehen. Es können somit Kunststoffe verwendet und gemischt werden, die ein Mehrphasensystem bilden, aber trotzdem auch gemeinsam wieder verwendet oder wieder aufgearbeitet werden können.

Die Mischung des die Folie bildenden Kunststoffes kann zu 10% bis 90%, insbesondere zu 40% bis 70%, aus Polyolefinen (unpolare Polymere) und zu 90% bis 10%, insbesondere zu 60% bis 30%, aus anderen Polymeren (polare Polymere) zusammengesetzt sein. Je nach Wahl der Mischungsverhältnisse können dabei unterschiedliche Eigenschaften mehr oder weniger eingestellt und hervorgehoben werden.

Die die Folie bildende Kunststoffmischung kann aus Polypropylen (PP) und/oder Polyethylen (PE) und/oder Ethylenvinylacetat (EVA) einerseits und aus Polymethylmetacrylat (PMMA) und/oder Polyacrylnitril (PAN) und/oder Acrylnitril-Butadien-Styrol-Blockcopolymerisat (ABS) und/oder Styrol-Acrylnitril-Blockcopolymerisate (SAN) und/oder Polyvinylchlorid (PVC) andererseits bestehen. Mit diesen verschiedenen Kunststoffen lasen sich Folien mit mehreren Phasen bilden, die dadurch eine entsprechend leichte Brech- oder Reißbarkeit beim Durchdrücken eines verpackten Gegenstandes haben.

Zweckmäßig ist es, wenn die Durchdrückfolie mit anderen Folien oder dergleichen verschweißbar oder versiegelbar ist. Sie kann dann mit einer Tiefzieh- oder Blisterpackung verbunden werden, ohne daß Klebstoff oder eine Siegelschicht erforderlich sind, was wiederum die Wiederaufarbeitung oder das Recycling begünstigt. Selbstverständlich kann die Durchdrückfolie aber auch mit geeigneten Klebern beschichtet werden, um eine gewünschte Haftung, zum Beispiel zu anderen Folien herzustellen.

Eine Steuerung oder Begünstigung bestimmter Eigenschaften kann dadurch bewirkt werden, daß die die Durchdrückfolie bildende Mischung einen erhöhten Anteil von PMMA, PVC, ABS, PAN und/oder SAN zur haftvermittlerfreien Verschweißbarkeit mit Folien oder dergleichen aus PVC, ABS, PAN oder PS (Polystyrol) enthält.

Eine andere Möglichkeit besteht darin, daß die die Durchdrückfolie bildende Mischung einen erhöhten Polyolefinanteil zur haftvermittlerfreien Verschweißbarkeit mit PP-Folien oder dergleichen enthält.

Die Durchdrückfolie kann zur Verbesserung der Barriereeigenschaft gegenüber Gas, Wasserdampf und dergleichen zum Beispiel mit PVDC (Polyvinylidenchlorid) oder SiO (Siliziumoxid) oder Aluminium beschichtet oder bedampft sein. Dadurch können beispielsweise Medikamente verpackt werden, die feuchtigkeitsempfindlich sind oder innerhalb der Verpackung eine definierte Atmosphäre erfordern.

Die Dicke der Durchdrückfolie kann etwa 20 bis 500 µm, insbesondere etwa 60 bis 300 µm betragen. Somit kann die Durchdrückbarkeit außerdem auch noch über die Dicke der Folie beeinflußt werden.

Insgesamt ergibt sich vor allem bei Kombination einzelner oder mehrerer der vorbeschriebenen Merkmale und Maßnahmen eine Durchdrückfolie, mit der Tabletten oder sonstige Pharmaka oder Kleinteile dicht abgeschlossen verpackt werden können und die ein stoffliches oder thermisches Recycling einer diese Durchdrückfolie aufweisenden Verpackung in wesentlich einfacherer Form ermöglicht, als es beim Einsatz von Aluminium oder anderen Abdeckmaterialien an Kunststoffverpackungen der Fall ist. Es wird also praktisch eine Monoverpackung geschaffen, deren Werkstoff entsprechend gut wiederverwendet werden kann, wobei aber trotzdem die erforderliche gute Durchdrückbarkeit durch das Mehrphasensystem der Durchdrück-das Mehrphasensystem der Durchdrückfolie erreicht wird.

Nachstehend sind zwei Ausführungsbeispiele der Erfindung anhand der Zeichnung naher beschrieben. Es zeigt in schaubildlicher Darstellung:
- Fig.1: eine Blisterpackung mit einer Durchdrückfolie als rückwärtigen Abschluß, welche bereits durchgedrückt ist, sowie
- Fig.2: eine Tablettenblisterpackung mit Durchdrückfolie, aus welcher eine Tablette entnommen ist.

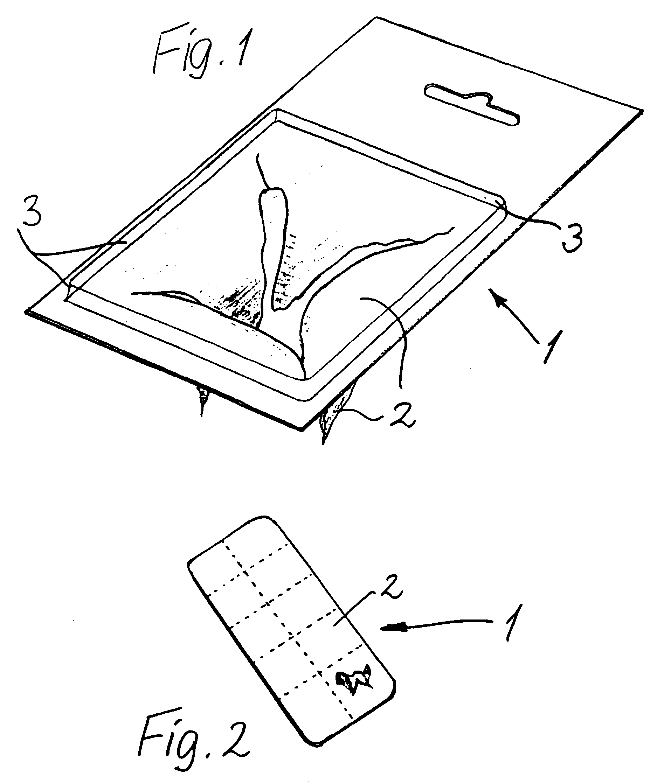

Eine im ganzen mit 1 bezeichnete Durchdrückverpackung kann entweder als Blisterpackung oder aber auch als Tablettenblister-Packung mit einzelnen tiefgezogenen Abteilungen für die einzelnen Tabletten ausgebildet sein. In beiden Fällen ist der tiefgezogene Bereich zur Aufnahme einer Ware oder mehrerer Tabletten oder dergleichen durch eine Durchdrückfolie 2 abgeschlossen, die das Verpackungsgut schützt und feuchtigkeitsdicht oder sogar luftdicht abschließt, aber ein leichtes Entnehmen des Verpackungsgutes dadurch erlaubt, daß dieses durch die Durchdrückfolie 2 einfach hindurchgedrückt wird. In Fig.1 und 2 ist ein Verpackungsgut bereits durch die Durchdrückfolie 2 hindurchgedrückt worden, so daß diese aufgerissen oder aufgebrochen ist.

Die Durchdrückfolie gemaß Fig.1 und 2 ist eine Kunststoffolie, wobei der Kunststoff eine Mischung aus solchen Kunststoffen ist, die in der Schmelze und danach in der daraus gebildeten Folie wenigstens zwei oder mehr Phasen bildet. Dadurch ergeben sich entsprechende Materialunterschiede innerhalb der Durchdrückfolie 2, die deren Aufbrechen und Aufreißen begünstigen. Durch die Verwendung von wenigstens zwei verschiedenartigen Thermoplasten , die eigentlich unverträglich miteinander sind, entstehen gewissermaßen von vorneherein Sollbruch- oder Sollreißstellen, die aber nicht als solche in Form von Schwächungen an der Durchdrückfolie 2 vorgefertigt sein müssen. Auf diese Weise ermöglichen die Verpackungen 1 nach Entnahme des Verpackungsgutes sowohl ein stoffliches als auch thermisches Recycling, ohne daß eine aufwendige Trennung von unterschiedlichen Werkstoffen durchgeführt werden muß und weniger Energieaufwand erforderlich ist, als es beispielsweise bei Kunststoffverpackungen der Fall ist, deren Durchdrückfolie aus Aluminium besteht.

Die Durchdrückfolie 2 ist dabei mit dem Blister 3 oder dergleichen haftvermittlerfrei verschweißt, da die Kunststoffmischungen eine entsprechende Verschweißbarkeit oder Versiegelbarkeit mit dem Kunststoffblister ermöglichen. Je nach Wahl der Zusammensetzung der Kunststoffmischung für die Durchdrückfolie und auch der Wahl der Dicke dieser Durchdrückfolie 2 können die Durchdrückbarkeit oder die Dichtigkeit der Verpackung sowie auch die Verschweißbarkeit beeinflußt und an jeweilige Erfordernisse angegaßt werden.

Die Durchdrückfolie 2 für Durchdrückverpackung 1 besteht aus einer Kunststoffmischung aus solchen Kunststoffen, die in der Schmelze und der daraus gebildeten Folie wenigstens zwei Phasen, also Inhomogenitäten, bildet, so daß die Reiß- und Schlagzugfestigkeit vermindert ist. Entsprechend gut läßt sich ein verpacktes Gut durch diese Folie durchdrücken, vorher aber vollständig abschließen.

## Patentansprüche

1. Durchdrückfolie (2) für Durchdrückverpackung (1), bei der die Durchdrückfolie (2) das Verpackungsgut abschließt, aber durch das Durchdrücken des Verpackungsgutes aufreißbar oder aufbrechbar ist, **dadurch gekennzeichnet**, daß der die Durchdrückfolie (2) bildende Werkstoff eine Mischung aus Kunststoffen ist, die in der Schmelze flüssige Phasen und in der daraus gebildeten Folie wenigstens zwei Phasen, also Inhomogenitäten, bildet.

2. Durchdrückfolie nach Anspruch 1, dadurch gekennzeichnet, daß sie aus einer Mischung von Polyolefinen und anderen Polymeren besteht.

3. Durchdrückfolie nach Anspruch 1 oder 2, dadurch gekennzeichnet, daß die Mischung des die Folie (2) bildenden Kunststoffes zu 10% bis 90%, insbesondere zu 40% bis 70%, aus Polyolefinen (unpolare Polymere) und zu 90% bis 10%, insbesondere zu 60% bis 30% aus anderen Polymeren (polare Polymere) zusammengesetzt ist.

4. Durchdrückfolie nach einem der Ansprüche 1 bis 3, dadurch gekennzeichnet, daß die die Folie (2) bildende Kunststoffmischung aus Polyproplen (PP) und/oder Polyethylen (PE) und/oder Ethylenvinylacetat (EVA) einerseits und Polymethylmethacrylat (PMMA) und/oder Polyacrylnitril (PAN) und/oder Acrylnitril-Butadien-Styrol-Blockcopolymerisatsat (ABS) und/oder Styrol-Acrylnitril-Blockcopolymerisate (SAN) und/oder Polyinylchlorid (PVC) andererseits besteht.

5. Durchdrückfolie nach einem der Ansprüche 1 bis 4, dadurch gekennzeichnet, daß sie mit anderen Kunststoffolien oder dergleichen verschweißbar oder versiegelbar ist.

6. Durchdrückfolie nach einem der Ansprüche 1 bis 5, dadurch gekennzeichnet, daß die sie bildende Mischung einen erhöhten Anteil von PMMA, PVC, ABS und/oder SAN zur haftvermittlerfreien Verschweißbarkeit mit Folien oder dergleichen aus PVC, ABS, PAN und/oder PS (Polystyrol) enthält.

7. Durchdrückfolie nach einem der Ansprüche 1 bis 5, dadurch gekennzeichnet, daß die sie bildende Mischung einen erhöhten Polyolefinanteil zur haftvermittlerfreien Verschweißbarkeit mit PP-Folien oder dergleichen enthält.

8. Durchdrückfolie nach einem der Ansprüche 1 bis 7, dadurch gekennzeichnet, daß die Durchdrückfolie (2) zur Verbesserung der Barriereeigenschaft gegenüber Gas, Wasserdampf und dergleichen - zum Beispiel mit PVDC (Polyvinylidenchlorid), SiO oder Aluminium, beschichtet ist.

9. Durchdrückfolie nach einem der Ansprüche 1 bis 8, dadurch gekennzeichnet, daß ihre Dicke etwa 20 bis 500 µm, insbesondere etwa 60 bis 300 µm beträgt.

## Claims

1. A foil sheet (2) for blister packs (1) in which the foil sheet (2) seals the packaged product, but can be torn open or broken open by means of pressing the packaged product through the foil sheet, **characterized in that** the material that forms the foil sheet (2) is a mixture of plastics that forms fluid phases in the melt and at least two phases, hence inhomogenities, in the foil sheet formed thereafter.

2. A foil sheet as claimed in claim 1, characterized by comprising a mixture of polyolefins and other polymers.

3. A foil sheet as claimed in claim 1 or claim 2, characterized in that the mixture of plastics that forms the foil sheet (2) comprises a combination of 10% to 90%, particularly 40% to 70% polyolefins (non-polar polymers), and 90% to 10%, particularly 60% to 30% other polymers (polar polymers).

4. A foil sheet as claimed in any one of claims 1 to 3, characterized in that the plastic mixture that forms the foil sheet (2) comprises polypropylene (PP) and/or polyethylene (PE) and/or ethylene vinylacetate (EVA) on the one hand, and polymethylmethacrylate (PMMA) and/or polyacrylonitrile (PAN) and/or acrylonitrile-butadiene-styrene block copolymer (ABS) and/or styrene-acrylonitrile block copolymer (SAN) and/or polyvinyl chloride (PVC) on the other hand.

5. A foil sheet as claimed in any one of claims 1 to 4, characterized by being capable of being welded or sealed with other plastic foils or the like.

6. A foil sheet as claimed in any one of claims 1 to 5, characterized in that the mixture that forms the foil sheet contains a larger proportion of PMMA, PVC, ABS and/or SAN for weldability without bonding agents to foils or the like made of PVC, ABS, PAN and/or PS (polystyrene).

7. A foil sheet as claimed in any one of claims 1 to 5, characterized in that the mixture that forms the foil sheet contains a larger proportion of polyolefins for weldability without bonding agents to PP foils or the like.

8. A foil sheet as claimed in any one of claims 1 to 7, characterized in that the foil sheet (2) is coated with, for example, PVDC (polyvinylidene chloride), SiO or aluminium to improve the barrier properties against gas, water vapour and the like.

9. A foil sheet as claimed in any one of claims 1 to 8, characterized in that the thickness of the foil sheet is approximately 20 to 500 µ, in particular approximately 60 to 300 µ.

## Revendications

1. Feuille à percer par enfoncement (2) pour emballage du type blister (1), dans laquelle la feuille à percer par enfoncement (2) enferme le produit emballé, mais peut être déchirée ou se briser lorsque l'on pousse le produit emballé à travers elle, caractérisée par le fait que la matière qui constitue la feuille à percer par enfoncement (2) est un mélange de matières plastiques qui forme dans la masse fondue des phases liquides et dans la feuille formée à partir de celle-ci, au moins deux phases, c'est-à-dire des non-homogénéités.

2. Feuille à percer par enfoncement selon la revendication 1, caractérisée par le fait qu'elle est constituée par un mélange de polyoléfines et d'autres polymères.

3. Feuille à percer par enfoncement selon la revendication 1 ou 2, caractérisée par le fait que le mélange de matières plastiques qui constitue la feuille (2) est composé de polyoléfines (polymères non polaires) pour 10% à 90%, et en particulier pour 40% à 70%, et d'autres polymères (polymères polaires pour 90% à 10%, et en particulier pour 60% à 30%.

4. Feuille à percer par enfoncement selon l'une des revendications 1 à 3, caractérisé par le fait que le mélange de matières plastiques qui constitue la feuille (2) est composé par du polypropylène et/ou du polyéthylène et/ou un copolymère éthylène-acétate de vinyle, d'une part, et par du polyméthacrylate de méthyle et/ou du polyacrylonitrile et/ou un copolymère en masse acrylonitrile-butadiène-styrène et/ou un copolymère en masse styrène-acrylonitrile et/ou du chlorure de polyvinyle, d'autre part.

5. Feuille à percer par enfoncement selon l'une des revendications 1 à 4, caractérisé par le fait qu'elle peut être soudée ou scellée à d'autres feuilles en matière plastique ou similaires.

6. Feuille à percer par enfoncement selon l'une des revendications 1 à 5, caractérisé par le fait que le mélange qui la constitue contient une teneur plus élevée en polyméthacrylate de méthyle, en chlorure de polyvinyle, en copolymère en masse acrylonitrile-butadiène-styrène et/ou en copolymère en masse styrène-acrylonitrile en vue d'une soudabilité sans adhésif sur des feuilles ou similaires en chlorure de polyvinyle, en copolymère en masse acrylonitrile-butadiène-styrène, en polyacrylonitrile et/ou en polystyrène.

7. Feuille à percer par enfoncement selon l'une des revendications 1 à 5, caractérisé par le fait que le mélange qui la constitue contient une teneur plus élevée en polyoléfine en vue d'une soudabilité sans adhésif sur des feuilles en polypropylène ou similaires.

8. Feuille à percer par enfoncement selon l'une des revendications 1 à 7, caractérisé par le fait que la feuille à percer par enfoncement (2) est revêtue - par exemple par du chlorure de polyvinylidène, de l'oxyde de silicium ou de l'aluminium - en vue d'améliorer l'effet barrière vis-à-vis des gaz, de la vapeur d'eau et similaires.

9. Feuille à percer par enfoncement selon l'une des revendications 1 à 8, caractérisé par le fait que son épaisseur est comprise entre 20 et 500 µm environ, et de préférence entre 60 et 300 µm environ,
